# EUROPEAN PATENT SPECIFICATION

(11) **EP 0 297 988 B1**
(45) Date of publication and mention of the grant of the patent: **13.11.1996**
(21) Application number: 88401687.4
(22) Date of filing: 30.06.1988
(51) Int. Cl.: H04N 7/16

(54) **Pay-TV time purchase scheme**
Zeitankaufsystem für Bezahltfernsehen
Système d'achat de temps pour télévision payante

(30) Priority: 30.06.1987 US 67852
(43) Date of publication of application: 04.01.1989
(73) Proprietor: COMSAT Corporation, Bethesda, MD 20817 (US)
(72) Inventor: Lieberman, Daniel, Gaithersburg Maryland 20879 (US)
(74) Representative: Pinguet, André

(56) References cited:
- EP-A- 0 128 555
- EP-A- 0 153 837
- EP-A- 0 164 983

## Description

### Background of the Invention

The present invention is directed to pay television systems, and more particularly to a technique for facilitating impulsive buying by subscribers to a pay television system.

The invention is particularly suitable for use in Direct Broadcast Satellite (DBS) systems.

Impulse buying is generally defined for purchase of optional programs which can be subscribed to with limited advanced notice, such as first run movies, special events, etc. These special programs are sold at a premium, generating increased revenue above that of the normal subscription service revenue.

Impulse buying can have other applications as well, such as in a pay-per-event service in which the event is supported only by direct payment. By this method, the program producer is paid a share of the revenue required by the pay television organization, rather than being paid a fixed fee. A side benefit to this payment method is feedback to the pay television system of the types of programs a subscriber is willing to support.

Another application of impulse buying is to have the subscriber pay for a television service only according to use, and using it only as desired. The television service essentially becomes a resource, similar to a telephone or electricity, or particularly a postage meter.

The resource concept has not previously been implemented in the pay television industry, for a variety of reasons. First, it is difficult to implement in existing pay-TV systems. These systems would require extensive re-work for proper implementation of the resource concept. Second, present pay-TV services are directed to a mass market, one which is not discriminating in its television viewing, and one which is amenable to the usual practice whereby the subscriber pays a fixed fee for a quantity of standard programs and/or an additional fee for specified programs, sometimes referred to as "premium" programs. The premium programs are often purchased on a "tiering" basis. Impulsive buying is difficult if not impossible.

EP-A-0 153 837 discloses an unidirectional television system such as satellite television broadcasting system, intended to transmit charging information corresponding to the content of the program being transmitted, keep an account of the amount by a charging amount accounting means, write charge data proportional to the amount in a memory, read out the charge data and display it. In this reference, a charge rate is set for a particular program, and a counter is incremented as the program progresses. The total count is then used to modify the contents of the viewing credit memory.

Another reference EP-A-0 128 555 discloses a method and apparatus for utilization with pay-per-view television systems. Predetermined credit unit amounts are periodically transmitted by the central station subsequent to a request and appropriate payment by a subscriber.

### Summary of the Invention

According to the present invention, storage devices, e.g., non-volatile memories, at the subscriber equipment store "viewing credits" corresponding to the amount of viewing time for which the subscriber has paid. Each program is associated with a charge per unit time, and the viewing credits are debited at an appropriate rate as long as the subscriber is tuned to that program. In addition, safeguards are provided to prevent unauthorized free viewing, by monitoring the memory debiting circuitry to verify the proper operation thereof.

If the stored viewing credit has not been debited while viewing a program, specific disabling means disable the viewing.

### Brief Description of the Drawings

The invention will be more clearly understood from the following description in conjunction with the accompanying drawings wherein the single Figure is a block diagram for describing the essential components of an embodiment of the present invention.

### Detailed Description of the Invention

While the present invention may be referred to as an impulse buying system in that it facilitates impulse buying, it would more accurately be referred to as "pay-per-time" (PPT) system. Each program is allotted units of time, with the number of units depending upon the quality and anticipated demand of the program. As an example, a highly-rated first-run movie may command 10 units for each hour of its two hour length, while an average television program may command 0.5 units per hour. The subscriber can purchase a desired number of units per month, above a fixed minimum and up to a specified limit, and then use the units as desired. As an example, if 60 units are purchased, then the subscriber can either watch three two-hour quality shows (6 hours) each month, 120 hours per month of average television programming or a mix of the two. The important point is that the subscriber watches only what he wants to watch. Essentially, the subscriber self-regulates television viewing and its charges.

There are several elements needed for implementation of a PPT scheme in a DBS system. A control channel is needed for down-loading information of purchased time to the subscriber decrypter. The down-loaded information will be unique to each subscriber, although there need not be a dedicated channel for each subscriber since a common channel can be shared with appropriate multiplexing.

A further requirement is some non-volatile storage of paid-up time in the subscriber decrypter storage, which can be incremented remotely and decremented locally. In addition, it is preferable to institute safeguards in order to recognize failures in the down-loading of information, to prevent attempts by subscribers to falsely allege that the system operator has not updated the paid-up time in accordance with purchase payments made, and also to assure that accidental failure of circuitry does not provide subscribers with a "free ride."

Lastly, some indication must be provided to the subscriber regarding the status of the time allotment.

The PPT method and apparatus need not be complex or expensive. Certain safeguards such as described above would add a degree of complexity and cost, depending on the level of protection desired.

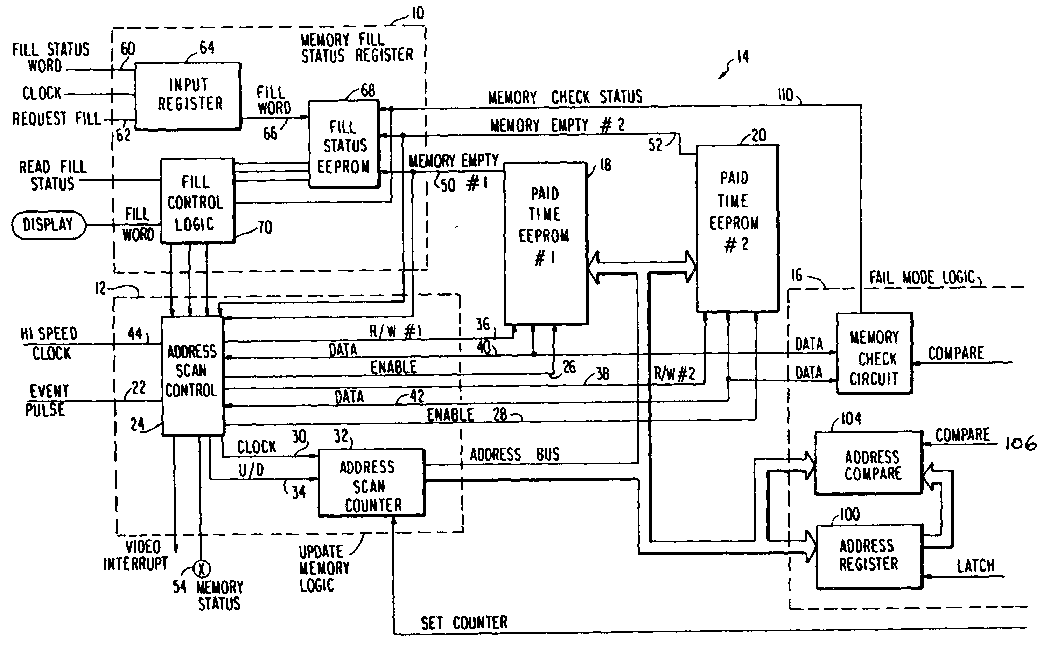

One example of a preferred embodiment of the invention will now be described with reference to Figure 1, although it should be emphasized that the embodiment of Figure 1 is given by way of example only. The arrangement of Figure 1 essentially comprises a memory fill status register 10, update memory logic 12, non-volatile storage 14 and fail mode logic 16. Storage for "paid-up time" is provided by the non-volatile storage 14, which in the preferred embodiment comprises a pair of 2 Kbit EEPROMs. When there is no paid-up time remaining in one of the memories 18 or 20, that memory stores a 1 at all address locations. The amount of paid-up time in a memory corresponds to the number of address locations which store zeros.

The description of the invention will begin with both of the memories 18 and 20 full. An event pulse is generated on line 22 at a frequency dependent on the cost of the program being viewed. This can be accomplished in any of a number of ways. For example, the channel selection device at the subscriber unit may generate event pulses at different rates for different channels. A disadvantage of this, however, would be the requirement that any channel always convey programs of the same cost, unless the pulse generating circuitry is controllable from the broadcasting station.

An alternative would be to monitor the station to which each subscriber is tuned, and to then send a "program word" (PW) to each subscriber over a Control Channel. The frequency of the PW would depend on the cost of the program, or the word could appear at a constant rate but have a value corresponding to a charge rate, with the PW then being used to program an event pulse generator at the subscriber equipment.

A still simpler technique may be to simply include the PW in the video signal itself, thus eliminating the need at the central station to monitor the channel to which each subscriber is tuned.

Updating of the memories 18 and 20 by the Update Memory Logic is accomplished as follows. First of all, the address scan control logic 24 within the Update Memory Logic 12 will normally control memories 18 and 20 via enable lines 26 and 28, respectively, such that only one is enabled at any given time, e.g., by coupling lines 26 and 28 to complementary outputs of a flip-flop. The logic 24 also enables reading or writing of the memories via signals on lines 36 and 38, respectively, while receiving or providing data on lines 40 and 42, respectively.

At power "turn-on" the counter 32 is set to a maximum count value. When an event pulse appears, the address scan control logic 24 generates a high frequency clock with which the address scan counter counts down, the signal on line 34 normally indicating a down count. As the address of the memory 18 (EEPROM #1) are counted down, the contents of the memory are read on line 36. When a "0" is read by the scan logic 24, the scan clock is halted and a "1" is substitute in that memory location. After this initial quick scan by the scan counter 32, the rate of the address scan clock on line 30 is reduced to that of the event pulses. With each event pulse, the address scan counter is decremented one count. At each count, the memory 18 is addressed and update with a deduction of one unit of paid-time by replacing a "0" with a "1" in the address location.

The lowest memory location in each of memories 18 and 20 is hardwired to a respective signal line 50 or 52 which are coupled to the scan control logic 24. When scan logic 24 detects a "1" on line 50 indicating that the memory 18 is empty, the status of lines 26 and 28 are reversed, so that memory 20 is thereafter accessed. At the same time, control logic 24 illuminates a memory status indicator 54, e.g., an LED. Also, the address counter 32 will recycle to its maximum count value and begin a high speed countdown as described above, searching for the first location in memory 20 at which a "0" is detected. This recycling of the scan counter 32 to its maximum value will occur automatically, assuming that the counter 32 is of the same capacity as each of the memories 18 and 20. If it is a larger counter, appropriate presetting circuitry could be included in the update memory logic.

Upon seeing the illuminated state of the memory status indicator 54, the subscriber can telephone the central office and request further time credit. A fill status word can then be sent from the central office to the subscriber, appearing on line 60. While not necessary for the practice of the present invention, the system in which the present invention is used may employ an encryption scheme whereby a Key Of the Month (KOM) must be transmitted periodically to the subscriber. In such case, the fill status word may be included with the KOM when the latter is transmitted to the subscriber. The fill status word preferably consists of a "fill" bit and a data code.

Detection of the "fill" bit by the subscriber's decryption equipment indicates that the subscriber "paid time" memory must be updated. A "request fill" code is then forwarded by the decryption equipment on line 62 to the input register 64, where it is combined with the date from the fill status word to form a "fill word.". The register 64 then provides the fill word as an output on line 66 to the fill status memory 68. The memory 68 then stores the "request fill" code together with the date of the request.

The fill status memory 68, in addition to storing the request fill code and request date, stores indications of the status of lines 50 and 52. The Fill Control Logic, upon detecting a Request Fill code in the memory 68 and also detecting in memory 68 that the lowest address of either of the memories 18 or 20 contains a '1", i.e., that the memory 18 or 20 is now empty, controls the scan counter 32 via scan control 24 to begin cycling through the addresses, while writing a "0" into each address location. For example, the logic 24, upon detecting that the memory 18 is empty, would provide a "0" on line 40 and a "write" signal on line 36, with the memory 18 being enabled via line 26. The cycling of the address counter 32 would result in a "0" being written into every address location of the memory 18. When the address counter 32 reaches the last address, it simply stops.

Writing a "0" in the final, or lowest address location removes the memory empty condition indicated on the line 50. The Fill Control Logic 70, upon now detecting that the memory 18 has been filled, erases the Fill Word from the memory 68 and updates the memory 68 to indicate the date of the most recently performed memory fill.

When the memory update malfunctions, or if the subscriber fells that the updating was incorrect, it is not much different than when a buyer of any service feels that the bill is incorrect or that service failures warrant deductions to the bill.

The PPT scheme of this invention may include a novel method for handling subscriber doubts and complaints. The method will require a display. If some form of Teletext service is available for the DBS system, making it possible for information in the video channel to be observed on the subscriber's television set, then the TV set could be used as the display. If Teletext is not available then a simple alpha-numeric LCD display, such as used in a pocket calculator, would be sufficient.

The operation for validating the memory update is interactive. The operation proceeds as follows:
a. The subscriber, feeling the update has been incorrect, calls the DBS office.
b. The DBS office notifies the central computer to transmit the subscriber's address followed by Read Fill Status EEPROM signal. The latter information will appear in a selected position of the control channel.
c. The "date" code of the most recent fill operation which is stored in the Fill Status EEPROM is "read" and displayed.
d. The subscriber is asked to read the date code. It is keyed into the computer and matched against the transmitted date of the last memory fill. If the date code matches, it is assumed that the subscriber's memory has been properly filled and that the subscriber is incorrect in the complaint. If the date code read by the subscriber doesn't match that of the last transmission, then it is matched against that of the previous transmission. If these match, then it is assumed the last update attempt was not correctly performed. The Fill Status word is sent again and the memory is immediately updated. On the other hand, if the date code read by the subscriber doesn't match that of the previous memory fill transmission, then it is assumed that either the Fill Status Logic has become faulty (it must have been operating for the previous fill, since the subscriber did not complain) or the subscriber is not being truthful. In either case a service call would be necessary.

Optionally, the subscriber can be provided with the capability to regularly monitor his most recent fill date, by simply providing him with a button or other means to generate a "read fill status" signal on line 80.

If the subscriber does not request a memory fill when seeing that the memory status LED 54 is illuminated, the second of the two memories will continue to be decremented until both memory empty status lines 50 and 52 indicate empty memories. At this point, the LED 54 flashes, and the video is periodically interrupted. The subscriber may then have several minutes to call the central office for purchase of additional time before the video is completely interrupted. Upon receiving a call from the subscriber, the Fill word will be immediately sent to the subscriber's decrypter, and the Fill operation returns the subscriber's decrypter to a normal condition.

Considering the forecasted reliability of the decrypter equipment, failure of the PPT circuit will be a rare occurrence. If it does occur and a memory becomes locked up, the subscriber could have unlimited viewing time. For this reason it is essential that fail-safe circuitry be implemented.

The circuitry, designated generally by reference number 16 in Figure 1, functions as follows. Upon power turn-on, the address of the Address Scan Counter 32 is placed in a register 100. Coincidentally, a timer (not shown) is set which will time out after 10 minutes, a time which is greater than the largest interval between event pulses. During this time interval the Address Scan Counter 32 should have been decremented, and this condition is checked in comparator 104 in response to a timer output on line 106. If it has been decremented, the memory location of that address is checked to ascertain if the location has a "1". If the Address Scan Counter or memory location checks are not validated, a second check is made. If the second check is not validated, then the subscriber must be turned off, an operation which alerts the subscriber to the equipment failure. The "turn off" is a simple operation; a signal is sent via line 110 to the Fill Status EEPROM where it is stored. The Fill Control Logic 70 signals the Address Scan Control 24 as in a memory empty condition, and the latter interrupts the video as it does in the memory empty operation. However, since there is no fill request, the Memory LED 54 does not light. The subscriber, being unaware of what caused the failure, realizes the central office must be notified.

The address scan and memory checks still continue. When these checks finally validate, the Fill status EEPROM is notified to modify its memory and remove the video interrupt.

As mentioned previously, the forecasted reliability of the decrypter equipment will minimize the chance of a failure mode which permits the subscriber free viewing, and it is possible that the high reliability will make the fail-mode circuitry unnecessary.

### Miscellaneous Design Considerations

Since the same address scan counter 32 is used for both "Fill" and "Update" operations, there is the possibility of the two operations conflicting. The conflict is resolved by the address scan control logic 24 which allows a "Fill" operation only after an "Update" operation is completed. Since the "Fill" operation requires a maximum of two seconds (accessing two thousand memory locations and writing to each of them with a write cycle of one millisecond), and the minimum period of the event pulse is set at one minute, a "Fill" operation performed between event pulses will be completed in sufficient time and will not conflict with the event update. The Fill Control Logic determines which memory 18 or 20 is to be updated. This will either be one which is empty or one which is ready to empty. For the latter case, the update does not occur until the memory is completely empty.

The selection of the size of the EEPROMs used for the memories 18 and 20 is made so as to ensure that they will last for the expected useful life of the system. EEPROMs have a limited life in their number of "writes," although the number of "reads" are almost unlimited. Vendor specifications indicate about 10,000 "writes" for an average EEPROM. A more accepted figure, one which allows for sufficient safety margin, is about 1000 "writes."

The number of "writes" received in a ten year period for the EEPROMs of the PPT scheme will depend upon the capacity of the EEPROMs. This capacity can be manipulated to an acceptable memory size, e.g., about 2K bits, so that the maximum number of "writes" to any subscriber is less than four in one month. If over a ten year period a particular subscriber required each month the maximum number of updates, (a higher unlikely event) the total number of "writes" would still be less than five hundred. The EEPROMs will therefore be safeguarded against too many "writes".

The system described herein provides a number of significant advantages. For example, in a typical narrowcasting program situation, e.g., a medical science series, viewers are hesitant to subscribe because of uncertainty of the quality of the program, uncertainty as to whether the hour of the program conflicts with other scheduled events, and because of a general fear of getting locked into another service. PPT solves this problem by allowing the subscriber to narrowcast as desired.

In addition, in a pay TV situation subscribers feel that a great part of their subscription fee supports programs in which they have no interest. Again, PPT solves this problem. After years of forms of pay television in which the public has had little control over programming, the appeal of paying only for what is watched would be great.

Still further, if the time charges for a quality television entertainment are less expensive than an outside entertainment event, the subscriber will often choose the pay-at-home television event. Pay per time television could successfully compete with other forms of entertainment, since the subscriber can immediately select the PPT event.

Finally, in impulse buying for DBS, a bottleneck exists when subscribers try to use the telephone to reach an authorizing office immediately before an event. In the system of the present invention, there are no inquiries and therefore no bottlenecks or lost subscribers.

It will be appreciated that various changes and modifications could be made to the system described above without departing from the scope of the invention as defined in the appended claims. For example, while the system is described as being activated at power on, it is possible that the PPT technique of this invention will be implemented in a system which includes a number of free programs for a fixed regular fee, so that the PPT scheme would only be activated, and the fail mode circuitry operated, whenever the tuner is tuned to a "premium" channel.

## Claims

1. A subscriber television system wherein multiple programs are transmitted from a central station to a plurality of subscribers at respective subscriber stations, said system comprising:
storage means at each subscriber station for storing viewing credit data representing viewing credit;
means for generating a debit signal in accordance with a fee associated with a program currently being viewed by a subscriber at each said subscriber station;
means for debiting said stored viewing credit data in accordance with said debit signal while said program is being viewed;
means for examining said stored viewing credit to see if it has been debited while said program is being viewed; and
means for disabling viewing if the stored viewing credit data has not been debited.

2. A system as defined in claim 1, wherein said debiting means erases said viewing credit data at a rate in accordance with said debit signal.

3. A system as defined in claim 1, further comprising monitoring means at each said subscriber station for determining whether said means for decreasing at that subscriber station is operating properly, and means responsive to said monitoring means for disabling viewing if said means for decreasing is not operating correctly.

4. A system as defined in claim 1, wherein said debiting means comprises means for successively changing the contents stored at successive addressed locations, said system further comprising means for determining if the contents of a presently addressed location of said storage means have been changed and means for disabling viewing if said presently addressed location have not been changed.

5. A system as defined in claim 1, wherein said storage means comprises first and second memories each for storing credit data, and said debiting means comprises means for erasing data from one of said first and second memories until said one memory is empty and for thereafter erasing data from the other of said memories.

6. A system as defined in claim 1, wherein said storage means comprises a non-volatile memory.

7. A system as defined in claim 6, wherein said memory comprises an EEPROM.

8. A system as defined in claim 1, wherein said debiting signal comprises a pulse generated at a rate corresponding to the charge for a particular program being viewed.

9. A system as defined in claim 8, wherein said rate of said pulse is determined by a control signal sent from said central station.

10. A system as defined in claim 9, wherein said control signal is sent from said central station at a rate corresponding to said pulse rate.

11. A system as defined in claim 1, further comprising means at each said subscriber station for adding data to said stored viewing credit data in response to a fill control signal sent from said central station.

12. A system as defined in claim 11, further comprising means at each said subscriber station for visually indicating to said subscriber the date of the most recent memory fill operation.

13. A system as defined in claim 1, wherein said debiting means comprises means for generating successive memory addresses, said system further comprising:
first comparing means for comparing generated addresses separated by a predetermined time interval; and
disabling means for disabling viewing if the compared addresses are not different from one another.

14. A system as defined in claim 13, wherein said debiting means further comprises means for successively changing the contents stored at successive addressed locations, said system further comprising means for determining if the contents of a presently addressed location have been changed, with said disabling means disabling viewing if said compared generated addresses are not different or if said contents of said currently addressed location have not been changed.

## Patentansprüche

1. Abonnentenfernsehsystem, bei welchem mehrere Programme von einer zentralen Station zu einer Vielzahl von Abonnenten an jeweiligen Abonnentenstationen übertragen werden, welches System umfaßt:
eine Speichereinrichtung an jeder Abonnentenstation zur Speicherung von Betrachtungsguthabendaten, die das Betrachtungsguthaben darstellen;
eine Einrichtung zur Erzeugung eines Belastungssignals gemäß einer Gebühr, die mit einem Programm verbunden ist, das gegenwärtig von einem Abonnenten an jeder der Abonnentenstationen betrachtet wird;
eine Einrichtung zur Belastung der gespeicherten Betrachtungsguthabendaten gemäß dem Belastungssignal, während das Programm betrachtet wird;
eine Einrichtung zur Überprüfung der gespeicherten Betrachtungsguthabendaten, um festzustellen, ob diese belastet wurden, während das Programm betrachtet wird; und
eine Einrichtung, um das Betrachten außer Funktion zu setzen, wenn die gespeicherten Betrachtungsguthabendaten nicht belastet wurden.

2. System nach Anspruch 1, bei welchem die Belastungseinrichtung die Betrachtungsguthabendaten mit einer Rate in Übereinstimmung mit dem Belastungssignal löscht.

3. System nach Anspruch 1, ferner umfassend eine Überwachungseinrichtung an jeder Abonnentenstation, um zu bestimmen, ob die Einrichtung zur Verringerung an der Abonnentenstation ordnungsgemäß arbeitet, und eine Einrichtung, die ansprechend auf die Überwachungseinrichtung das Betrachten außer Funktion setzt, wenn die Einrichtung zur Verringerung nicht korrekt arbeitet.

4. System nach Anspruch 1, bei welchem die Belastungseinrichtung eine Einrichtung zur sukzessiven Veränderung des in aufeinanderfolgenden adressierten Speicherzellen gespeicherten Inhalts umfaßt, welches System ferner eine Einrichtung, um zu bestimmen, ob der Inhalt einer gegenwärtig adressierten Speicherzelle der Speichereinrichtung verändert wurde, und eine Einrichtung, um das Betrachten außer Funktion zu setzen, wenn die gegenwärtig adressierte Speicherzelle nicht verändert wurde, umfaßt.

5. System nach Anspruch 1, bei welchem die Speichereinrichtung einen ersten und einen zweiten Speicher jeweils zum Speichern von Guthabendaten umfaßt und die Belastungseinrichtung eine Einrichtung zum Löschen von Daten aus entweder dem ersten oder dem zweiten Speicher, bis ein Speicher leer ist, und zum anschließenden Löschen von Daten aus dem anderen Speicher umfaßt.

6. System nach Anspruch 1, bei welchem die Speichereinrichtung einen nichtflüchtigen Speicher umfaßt.

7. System nach Anspruch 6, bei welchem der Speicher einen EEPROM umfaßt.

8. System nach Anspruch 1, bei welchem das Belastungssignal einen Impuls umfaßt, der mit einer Rate erzeugt wird, die der Gebühr für ein bestimmtes Programm, das betrachtet wird, entspricht.

9. System nach Anspruch 8, bei welchem die Rate des Impulses durch ein Steuersignal bestimmt wird, das von der Zentralstation gesendet wird.

10. System nach Anspruch 9, bei welchem das Steuersignal von der Zentralstation mit einer Rate gesendet wird, die der Impulsrate entspricht.

11. System nach Anspruch 1, ferner umfassend eine Einrichtung an jeder der Abonnentenstationen zum Hinzufügen von Daten zu den gespeicherten Betrachtungsguthabendaten ansprechend auf ein Füllsteuersignal, das von der Zentralstation gesendet wird.

12. System nach Anspruch 11, ferner umfassend eine Einrichtung an jeder Abonnentenstation zur visuellen Anzeige der Daten der jüngsten Speicherfülloperation für den Abonnenten.

13. System nach Anspruch 1, bei welchem die Belastungseinrichtung eine Einrichtung zur Erzeugung von sukzessiven Speicheradressen umfaßt, welches System ferner umfaßt:
eine erste Vergleichseinrichtung zum Vergleichen von erzeugten Adressen, die durch einen vorbestimmten Zeitintervall getrennt sind; und
eine Ausschalteinrichtung, um das Betrachten außer Funktion zu setzen, wenn die verglichenen Adressen sich nicht voneinander unterscheiden.

14. System nach Anspruch 13, bei welchem die Belastungseinrichtung ferner eine Einrichtung zur sukzessiven Veränderung des Inhalts, der in aufeinanderfolgenden adressierten Speicherzellen gespeichert ist, umfaßt, welches System ferner eine Einrichtung umfaßt, um zu bestimmen, ob der Inhalt einer gegenwärtig adressierten Speicherzelle verändert wurde, wobei die Ausschalteinrichtung das Betrachten außer Funktion setzt, wenn die verglichenen erzeugten Adressen nicht verschieden sind oder wenn der Inhalt der gegenwärtig adressierten Speicherzelle nicht verändert wurde.

## Revendications

1. Système de télévision de souscripteur dans lequel une pluralité de programmes sont transmis à partir d'une station centrale vers une pluralité de souscripteurs à des stations de souscripteurs respectives, ledit système comprenant :
- des moyens de stockage à chaque station de souscripteur pour stocker des données de crédit d'antenne représentant un crédit d'antenne ;
- des moyens pour générer un signal de débit en fonction d'une redevance associée à un programme actuellement regardé par un souscripteur à chacune desdites stations de souscripteur ;
- des moyens pour débiter lesdites données de crédit d'antenne stockées en fonction dudit signal de débit alors que ledit programme est regardé ;
- des moyens pour examiner ledit crédit d'antenne stocké pour voir s'il a été débité alors que ledit programme est regardé ; et
- des moyens pour couper l'antenne si les données de crédit d'antenne stockées n'ont pas été débitées.

2. Système selon la revendication 1, dans lequel lesdits moyens de débit effacent lesdites données de crédit d'antenne à une vitesse en fonction dudit signal de débit.

3. Système selon la revendication 1, comprenant en outre des moyens de surveillance à chacune desdites stations de souscripteur pour déterminer si lesdits moyens pour diminuer à cette station de souscripteur fonctionnent correctement, et des moyens sensibles auxdits moyens de surveillance pour couper l'antenne si lesdits moyens pour diminuer ne fonctionnent pas correctement.

4. Système selon la revendication 1, dans lequel lesdits moyens de débit comprennent des moyens pour changer successivement le contenu stocké à des endroits adressés successifs, ledit système comprenant en outre des moyens pour déterminer si les contenus d'un endroit présentement adressé desdits moyens de stockage ont été changés et des moyens pour couper l'antenne si ledit endroit présentement adressé n'a pas été changé.

5. Système selon la revendication 1, dans lequel lesdits moyens de stockage comprennent des première et seconde mémoires destinées chacune à stocker des données de crédit, et lesdits moyens de débit comprennent des moyens pour effacer des données à partir d'une desdites première et seconde mémoires jusqu'à ce que ladite une mémoire soit vide et pour effacer par la suite les données à partir de l'autre desdites mémoires.

6. Système selon la revendication 1, dans lequel lesdits moyens de stockage comprennent une mémoire rémanente.

7. Système selon la revendication 6, dans lequel ladite mémoire comprend un EEPROM.

8. Système selon la revendication 1, dans lequel ledit signal de débit comprend une impulsion générée à une vitesse correspondant à la charge pour un programme particulier regardé.

9. Système selon la revendication 8, dans lequel ladite vitesse de ladite impulsion est déterminée par un signal de commande envoyé à partir de ladite station centrale.

10. Système selon la revendication 9, dans lequel ledit signal de commande est envoyé à partir de ladite station centrale à une vitesse correspondant à ladite vitesse d'impulsion.

11. Système selon la revendication 1, comprenant en outre des moyens à chacune desdites stations de souscripteur pour ajouter des données auxdites données de crédit d'antenne stockées en réponse à un signal de commande de remplissage envoyé à partir de ladite station centrale.

12. Système selon la revendication 11, comprenant en outre des moyens à chacune desdites stations de souscripteur pour indiquer visuellement audit souscripteur la date de l'opération de remplissage de mémoire la plus récente.

13. Système selon la revendication 1, dans lequel lesdits moyens de débit comprennent des moyens pour générer des adresses de mémoire successives, ledit système comprenant en outre :
- des premiers moyens de comparaison pour comparer des adresses générées séparées par un intervalle de temps prédéterminé ; et
- des moyens de mise hors fonction pour couper l'antenne si les adresses comparées ne sont pas différentes les unes des autres.

14. Système selon la revendication 13, dans lequel lesdits moyens de débit comprennent en outre des moyens pour changer successivement les contenus stockés à des endroits adressés successifs, ledit système comprenant en outre des moyens pour déterminer si les contenus d'un endroit présentement adressé a été changé, avec lesdits moyens de mise hors fonction coupant l'antenne si lesdites adresses générées comparées ne sont pas différentes ou si lesdits contenus dudit endroit actuellement adressé n'a pas été changé.
